# EUROPEAN PATENT APPLICATION

(11) **EP 4 741 680 A1**
(43) Date of publication of application: **13.05.2026**
(21) Application number: 24836033.1
(22) Date of filing: 02.07.2024
(51) Int. Cl.: F16G 13/16, H02G 3/04

(54) **DEVICE FOR GUIDING LONG OBJECT**

(30) Priority: 04.07.2023 JP 2023110001
(71) Applicant: Tsubakimoto Chain Co., Osaka-shi, Osaka 530-0005 (JP)
(72) Inventor: OYAMA, Ayaka, Osaka-shi, Osaka 530-0005 (JP)
(74) Representative: Keenway Patentanwälte Neumann Heine Taruttis
(86) International application number: PCT/JP2024/023900
(87) International publication number: WO 2025/009520

(57) **Abstract**

An elongated object guiding device includes links (20). Each link (20) includes two link plates (11), a first connecting member (12), and a second connecting member (13). The first connecting member (12) includes a plate-shaped body (12a), a first engaging portion (40) that engages with the first receiving portion (30a), and a second engaging portion (50) that engages with the second receiving portion (30b). At least one of the first receiving portion (30a) and the second receiving portion (30b) includes an outer receiving portion (32a). At least one of the first engaging portion (40) and the second engaging portion (50) includes a hanging wall (42) extending in a thickness direction of the body (12a), an inner engaging portion (43) that engages with the outer receiving portion (32a), and an outer protruding wall (44) protruding outward from the hanging wall (42).

## Description

### TECHNICAL FIELD

The present disclosure relates to an elongated object guiding device.

### BACKGROUND ART

Patent Literature 1 discloses an energy chain.

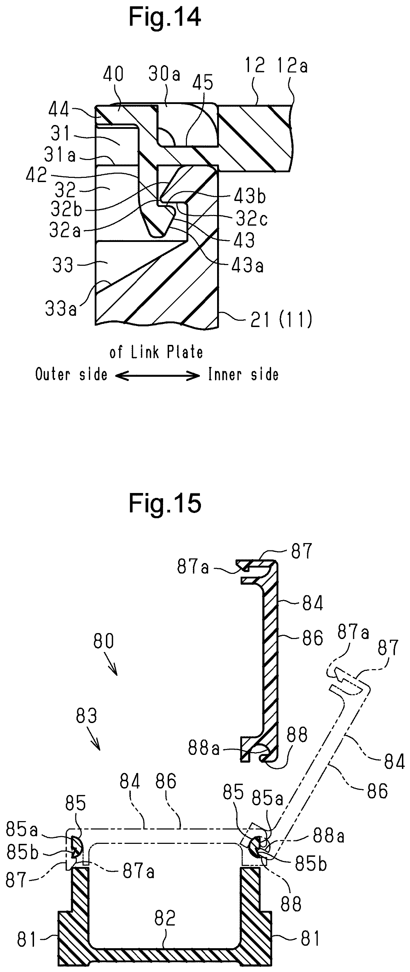

As shown in Fig. 15, the energy chain 80 includes two link plates 81 that face each other and a connecting piece 82 that integrally connects the two link plates 81 to each other. The two link plates 81 and the connecting piece 82 form a link 83. Further, a holding plate 84 spans between the two link plates 81. An energy conducting member such as a cable or hose is arranged in a space surrounded by the two link plates 81, the connecting piece 82, and the holding plate 84.

Each of the two link plates 81 includes, at its upper end, an engaging piece for engaging the holding plate 84. The engaging piece is formed of a semicircular bar 85 having the inward-facing side of the two link plates 81 as a circumferential surface. The outward-facing side of the bar 85 defines a flat surface 85a. The flat surface 85a includes a groove 85b extending in the axial direction of the link 83.

The holding plate 84 includes a base plate 86, a first side piece 87 hanging from one end of the base plate 86, and a second side piece 88 hanging from the other end of the base plate 86. The first side piece 87 includes a protruding piece 87a that engages with the groove 85b of the bar 85. The second side piece 88 includes a semicircular locking hole 88a fitted to the bar 85.

To couple the holding plate 84 to the two link plates 81, the bar 85 of one of the link plates 81 is fitted into the semicircular locking hole 88a of the second side piece 88 of the holding plate 84. Next, the holding plate 84 is pivoted about the semicircular locking hole 88a. Then, the protruding piece 87a of the first side piece 87 of the holding plate 84 is engaged with the groove 85b of the bar 85 of the other link plate 81. As a result, the holding plate 84 is coupled to the two link plates 81.

### CITATION LIST

### Patent Literature

Patent Literature 1: JPH02-526Y

### SUMMARY OF INVENTION

### Technical Problem

In the energy chain 80, which serves as an elongated object guiding device disclosed in, for example, Patent Literature 1, the holding plate 84, which serves as a first connecting member, may be disengaged from the link plate 81 to allow inspection or replacement of the elongated object. In this case, an operator inserts, for example, a tool between the first side piece 87 of the holding plate 84 and the bar 85 of the other link plate 81 to disengage the protruding piece 87a of the first side piece 87 from the groove 85b of the bar 85. However, since the operator may find it difficult to understand how to disengage the holding plate 84 using a tool, it is difficult to disengage the holding plate 84.

### Solution to Problem

An elongated object guiding device according to an aspect of the present disclosure includes links pivotably connected in series to each other. Each of the links includes two link plates facing each other, a first connecting member that couples the two link plates to each other, and a second connecting member that couples the two link plates to each other. The elongated object guiding device is configured to accommodate an elongated object in a space surrounded by the two link plates, the first connecting member, and the second connecting member in each of the links. One of the two link plates in each of the links includes a first receiving portion and the other one of the two link plates includes a second receiving portion. The first connecting member in each of the links includes a plate-shaped body, a first engaging portion that engages with the first receiving portion, and a second engaging portion that engages with the second receiving portion. A side where the two link plates face each other is defined as an inner side of the link, and a side opposite thereto is defined as an outer side of the link. At least one of the first receiving portion and the second receiving portion includes an outer receiving portion. At least one of the first engaging portion and the second engaging portion includes a hanging wall extending in a thickness direction of the body, an inner engaging portion located on the hanging wall and configured to engage with the outer receiving portion, and an outer protruding wall that protrudes outward from the hanging wall.

### BRIEF DESCRIPTION OF DRAWINGS

Fig. 1 is a perspective view of an elongated object guiding device according to an embodiment.
Fig. 2 is a perspective view of a link.
Fig. 3 is a perspective view of a first connecting member.
Fig. 4 is a perspective view of the first connecting member as seen from another angle.
Fig. 5 is a perspective view of a second receiving portion of the link plate.
Fig. 6 is an exploded perspective view of the link.
Fig. 7 is a cross-sectional view illustrating a state in which a hinge shaft is engaged with a hinge shaft-receiving portion.
Fig. 8 is a perspective view illustrating a state in which the outer receiving portion in the first receiving portion of the link plate has not been engaged with the inner engaging portion in the first engaging portion of the first connecting member.
Fig. 9 is a perspective view illustrating a state in which the outer receiving portion in the first receiving portion of the link plate is engaged with the inner engaging portion in the first engaging portion of the first connecting member.
Fig. 10 is a partial, cross-sectional view illustrating a state in which the outer receiving portion in the first receiving portion of the link plate has not been engaged with the inner engaging portion in the first engaging portion of the first connecting member.
Fig. 11 is a partial, cross-sectional view illustrating a state in which the outer receiving portion is engaged with the inner engaging portion.
Fig. 12 is a partial, cross-sectional view illustrating a state in which the outer receiving portion is engaged with the inner engaging portion according to a modification.
Fig. 13 is a partial, cross-sectional view illustrating a state in which the outer receiving portion is engaged with the inner engaging portion according to another modification.
Fig. 14 is a partial, cross-sectional view illustrating a state in which the outer receiving portion is engaged with the inner engaging portion according to a further modification.
Fig. 15 is a cross-sectional view of a prior-art elongated object guiding device.

### DESCRIPTION OF EMBODIMENTS

An elongated object guiding device 10 according to an embodiment will now be described.

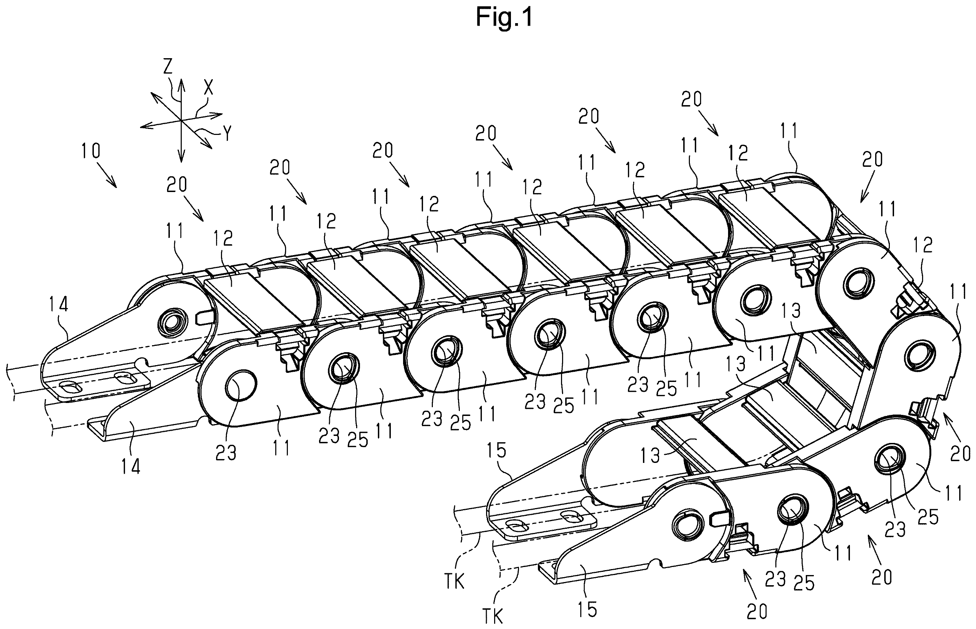

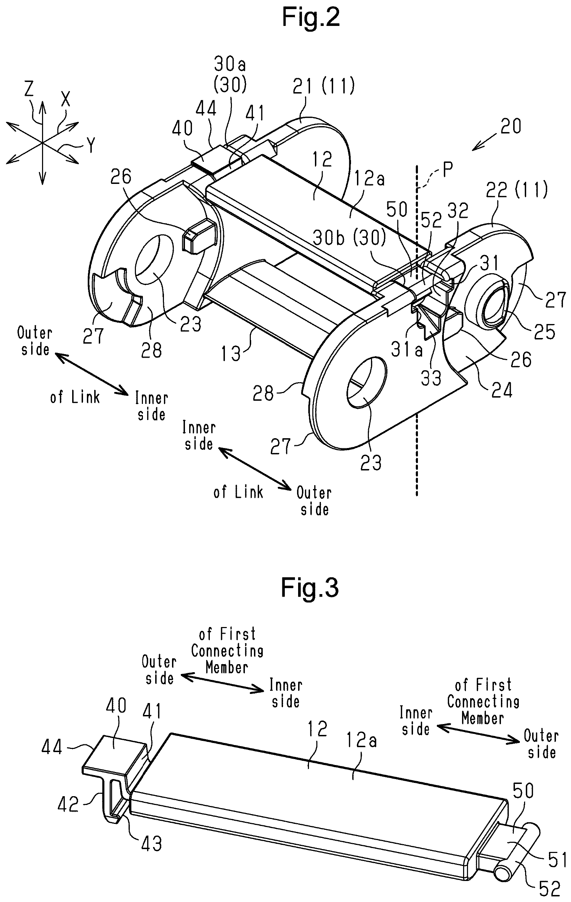

As shown in Figs. 1 and 2, the elongated object guiding device (hereinafter also referred to as the guide device) 10 includes links 20. Each link 20 includes two link plates 11 facing each other, a first connecting member 12 that couples the two link plates 11 to each other, and a second connecting member 13 that couples the two link plates 11 to each other. In the guide device 10, the links 20 are pivotably connected to each other in series.

The series-arrangement direction of the links 20 is hereinafter referred to as the series-arrangement direction X. The direction which is orthogonal to the series-arrangement direction X and in which the two link plates 11 face each other is defined as the widthwise direction Y.

As shown in Fig. 1, the direction orthogonal to the series-arrangement direction X and the widthwise direction Y is defined as the vertical direction Z with reference to a location where the links 20 extend linearly.

Of the connected links 20, the link 20 at one end in the series-arrangement direction X includes a connecting bracket 14. The connecting bracket 14 is connected to a moving body (not shown) that moves back and forth in the series-arrangement direction X. The link 20 at the other end in the series-arrangement direction X includes a fixed bracket 15. The fixed bracket 15 is fixed to a fixing portion (not shown). The side where the connecting bracket 14 is connected is defined as the front side, and the side where the fixed bracket 15 is fixed is defined as the rear side.

As shown in Fig. 2, the side where the two link plates 11 face each other is defined as the inner side of the link 20, and its opposite side is defined as the outer side of the link 20. Hereinafter, in the two link plates 11, the link plate 11 on the far side in Fig. 2 may be referred to as a first link plate 21. Further, in the two link plates 11, the link plate 11 on the near side in Fig. 2 may be referred to as a second link plate 22.

As shown in Figs. 1 and 2, the guide device 10 accommodates an elongated object TK in a space surrounded by the two link plates 11, the first connecting member 12, and the second connecting member 13 in each link 20. The elongated object TK is flexibly bendable. The guide device 10 accommodates the elongated object TK in the space, and guides the elongated object TK while protecting the elongated object TK with the links 20.

Hereinafter, the guide device 10 will be described in detail.

### <Link Plate>

As shown in Fig. 2, the link plate 11 is formed in a plate shape elongated in the series-arrangement direction X. The opposite ends of the link plate 11 in the series-arrangement direction X have a semicircular shape in which its opposite outer sides projects outward in the series-arrangement direction X.

The link plate 11 includes, at its upper end in the vertical direction Z of a central portion in the series-arrangement direction X, a receiving portion 30 with which the first connecting member 12 engages. The receiving portion 30 will be described later.

The link plate 11 includes, at its lower end in the vertical direction Z of a central portion in the series-arrangement direction X, a receiving portion with which the second connecting member 13 engages. This receiving portion will not be described. The second connecting member 13 is connected to the two link plates 11. The lower ends of the two link plates 11 are connected to each other by the second connecting member 13.

Hereinafter, the second link plate 22 of the two link plates 11 will be described.

As shown in Fig. 2, the second link plate 22 includes a through-hole 23 on the front side of the central portion in the series-arrangement direction X. The second link plate 22 includes an outer thin-walled portion 24. The outer thin-walled portion 24 is located rearward of the central portion in the series-arrangement direction X, and has a thickness that decreases from the outer side toward the inner side of the second link plate 22. The front edge of the outer thin-walled portion 24 is formed in a curved shape that projects forward.

The second link plate 22 includes a columnar shaft 25 protruding outward at a central portion of the outer thin-walled portion 24. The protruding height of the shaft 25 is substantially equal to the depth of the indent of the outer thin-walled portion 24. That is, the top of the shaft 25 has substantially the same height as the outer surface of the second link plate 22 except for the outer thin-walled portion 24.

In the second link plate 22, the outer thin-walled portion 24 includes a rectangular projection 26 on the front side of the shaft 25. On the rear side of the shaft 25, the second link plate 22 includes a fan-shaped recess 27 in which the thickness of the second link plate 22 is further reduced and which spreads rearward in a fan shape.

On the front side of the central portion in the series-arrangement direction X, the second link plate 22 includes an inner thin-walled portion 28 recessed from the inner side toward the outer side of the second link plate 22.

As shown in Fig. 2, the shape of the inner thin-walled portion 28 is the same as that of the outer thin-walled portion 24 on the assumption that the second link plate 22 is pivoted 180° about a pivoting axis P extending in the vertical direction Z at the central portion of the second link plate 22 in the series-arrangement direction X. That is, the inner thin-walled portion 28 includes the rectangular projection 26 and the fan-shaped recess 27 on the inner side of the link 20, and includes the through-hole 23 at the position corresponding to the shaft 25 in the outer thin-walled portion 24.

As shown in Fig. 2, the two link plates 11 are bilaterally symmetrical. **In** other words, the two link plates 11 are mirror-symmetrical to each other, including the shape of the receiving portion 30. That is, the first link plate 21 and the second link plate 22 are in a mirror-image relationship with respect to the direction in which they face each other.

As shown in Figs. 1 and 2, in the guide device 10, multiple links 20 are pivotably connected to each other in series. To connect the links 20, the rear side of one pair of link plates 11 is connected to the front side of another pair of link plates 11. Specifically, the shaft 25 located in the outer thin-walled portion 24 of one pair of link plates 11 is fitted into the through-hole 23 located in the inner thin-walled portion 28 of the other pair of link plates 11. In this state, the rectangular projection 26 of the outer thin-walled portion 24 is arranged in the fan-shaped recess 27 of the inner thin-walled portion 28. Further, the rectangular projection 26 of the inner thin-walled portion 28 is arranged in the fan-shaped recess 27 of the outer thin-walled portion 24.

Such a configuration allows one pair of link plates 11 to provide the shaft 25 about which the other pair of link plates 11 is pivotable. The pivoting range of the other two link plates 11 is defined within a range in which the rectangular projection 26 of the other pair of link plates 11 arranged in the fan-shaped recess 27 of the one pair of link plates 11 is swingable. The pivoting range can be altered by changing the angle and direction of the fan-shaped recess 27 or the shape and position of the rectangular projection 26.

As described above, multiple links 20 are pivotably connected to each other by repeatedly connecting one pair of link plates 11 to another pair of link plates 11.

### <Receiving Portion of Link Plate>

As shown in Fig. 2, the link plate 11 includes, at its upper end of the central portion in the series-arrangement direction X, the receiving portion 30, with which the first connecting member 12 engages. Specifically, the first link plate 21 of two link plates 11 includes a first receiving portion 30a with which the first engaging portion 40 of the first connecting member 12 engages. The second link plate 22 of two link plates 11 includes a second receiving portion 30b with which the second engaging portion 50 of the first connecting member 12 engages. Thus, one of the two link plates 11 includes the first receiving portion 30a, with which the first engaging portion 40 of the first connecting member 12 engages. The other one of the two link plates 11 includes the second receiving portion 30b, with which the second engaging portion 50 of the first connecting member 12 engages.

Since the first receiving portion 30a and the second receiving portion 30b have the same shape, the second receiving portion 30b will be described below. Thus, the first receiving portion 30a will not be described.

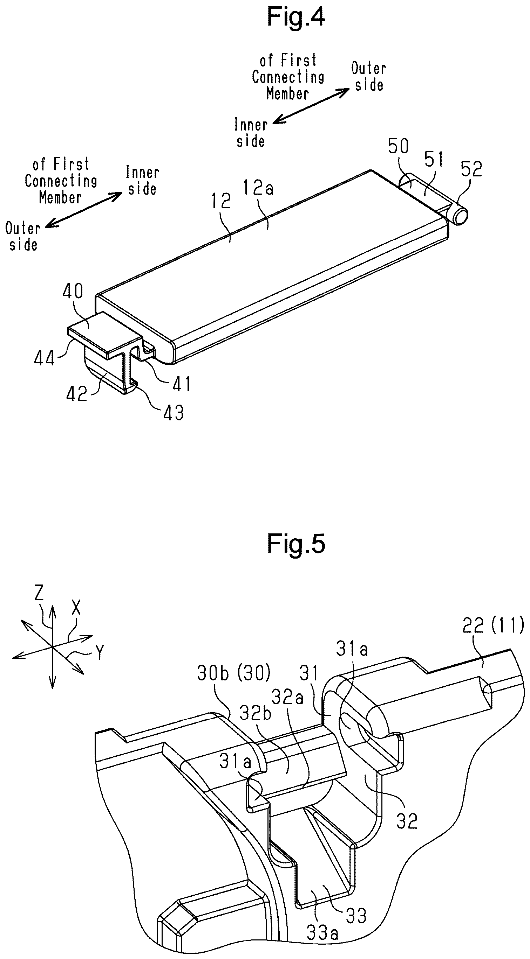

As shown in Fig. 5, the second receiving portion 30b includes a first cutout 31 that is cut out downward from the upper end of the second link plate 22. The first cutout 31 extends through the second link plate 22 in the thickness direction. The depth of the first cutout 31, i.e., the length of the first cutout 31 in the vertical direction Z, is substantially equal to the thickness of the body 12a of the first connecting member 12.

The second receiving portion 30b includes hinge shaft-receiving portions 31a that are recessed from the first cutout 31 toward opposite sides in the series-arrangement direction X, respectively. The hinge shaft-receiving portions 31a extend to the outer surface of the second link plate 22 in the thickness direction of the second link plate 22. The inner edge of each hinge shaft-receiving portion 31a has a semicircular shape. This allows a hinge shaft 52, which will be described later, to pivot while engaging with the hinge shaft-receiving portion 31a.

The second receiving portion 30b includes a second cutout 32 below the first cutout 31. The second cutout 32 is formed by cutting out an outer portion of the second link plate 22 in the thickness direction of the second link plate 22. The width of the second cutout 32 in the series-arrangement direction X is the same as that of the first cutout 31 in the same direction.

The second receiving portion 30b includes an outward projection 32a, which serves as an outer receiving portion protruding outward, inside the second cutout 32.

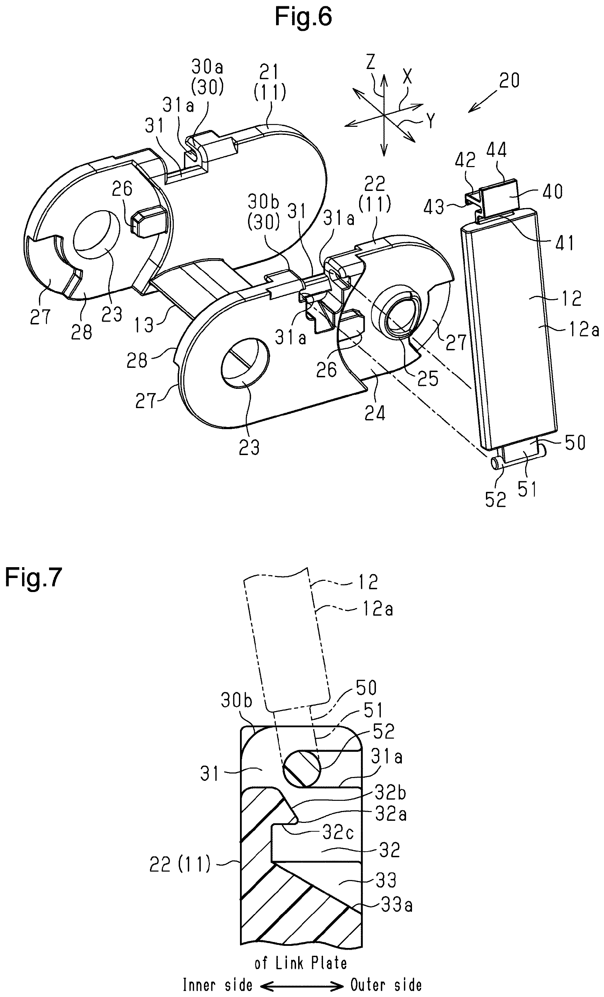

As shown in Fig. 7, the outward projection 32a includes an inclined surface 32b that inclines outward and obliquely downward. Further, the outward projection 32a includes a horizontal surface 32c extending in the thickness direction of the second link plate 22. The horizontal surface 32c is located below the inclined surface 32b.

As shown in Figs. 5 and 7, the second receiving portion 30b includes a third cutout 33 below the second cutout 32. The third cutout 33 extends from a central portion of the second cutout 32 in the series-arrangement direction X. The third cutout 33 includes an inclined surface 33a that extends obliquely downward and outward. The width of the third cutout 33 in the series-arrangement direction X is shorter than the width of the second cutout 32. The third cutout 33 functions as a release recess into which a tool or a finger is inserted when the first engaging portion 40 of the first connecting member 12 is removed from the receiving portion 30 of the first link plate 21.

### <First Connecting Member>

As shown in Figs. 3 and 4, the first connecting member 12 includes a plate-shaped body 12a, a first engaging portion 40 that engages with the first receiving portion 30a of the first link plate 21, and a second engaging portion 50 that engages with the second receiving portion 30b of the second link plate 22.

### (Body)

As shown in Figs. 2 and 3, the plate surface of the body 12a extends in the series-arrangement direction X and is elongated in the widthwise direction Y.

Hereinafter, in the series-arrangement direction of the body 12a, the side toward the center of the body 12a is defined as the inner side of the first connecting member 12, and its opposite side is defined as the outer side.

### (First Engaging Portion)

The first engaging portion 40 includes a curved portion 41 extending from one longitudinal end of the body 12a, a hanging wall 42 extending downward from the outer end of the curved portion 41 in the thickness direction of the body 12a, and an outer protruding wall 44 protruding outward from the upper end of the hanging wall 42.

As shown in Figs. 3 and 4, the curved portion 41 protrudes from one end of the body 12a toward the outside of the body 12a, then curves upward, and further curves and extends outward. That is, the curved portion 41 extends in a crank-shaped curve. The term "crank-shaped" refers to a shape having two or more portions curved in mutually opposite directions.

The expression "extending downward in the thickness direction of the body 12a" of the hanging wall 42 does not need to completely coincide with the thickness direction of the body 12a, and includes a direction slightly inclined with respect to the thickness direction of the body 12a.

As shown in Figs. 3 and 4, the first engaging portion 40 includes an inward projection 43, which serves as an inner engaging portion protruding inward, at the lower end of the hanging wall 42.

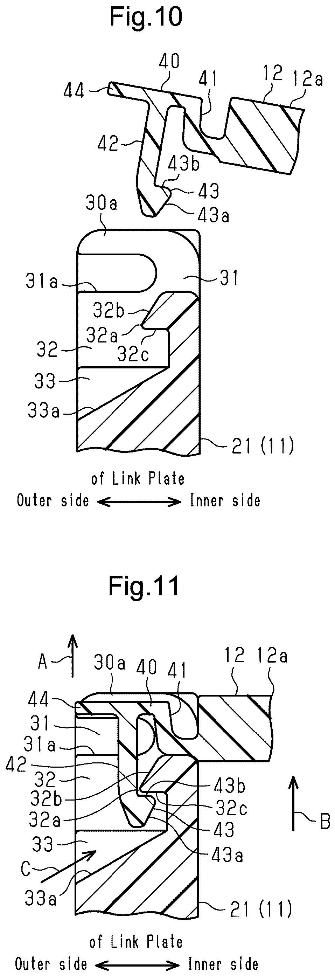

As shown in Fig. 10, the inward projection 43 includes an inclined surface 43a that is inclined obliquely upward and inward. Further, the inward projection 43 includes a parallel surface 43b extending parallel to the series-arrangement direction of the body 12a. The parallel surface 43b is located above the inclined surface 43a.

As shown in Fig. 11, the outer protruding wall 44 includes such a protruding distance that the tip of the outer protruding wall 44 does not protrude from the outer end of the first link plate 21 in a state in which the first engaging portion 40 is coupled to the first receiving portion 30a of the first link plate 21. Specifically, the tip of the outer protruding wall 44 is flush with the outer end of the first link plate 21.

As shown in Fig. 11, the upper surface (outer surface) of the outer protruding wall 44 is positioned lower than the upper surface (outer surface) of the body 12a of the first connecting member 12.

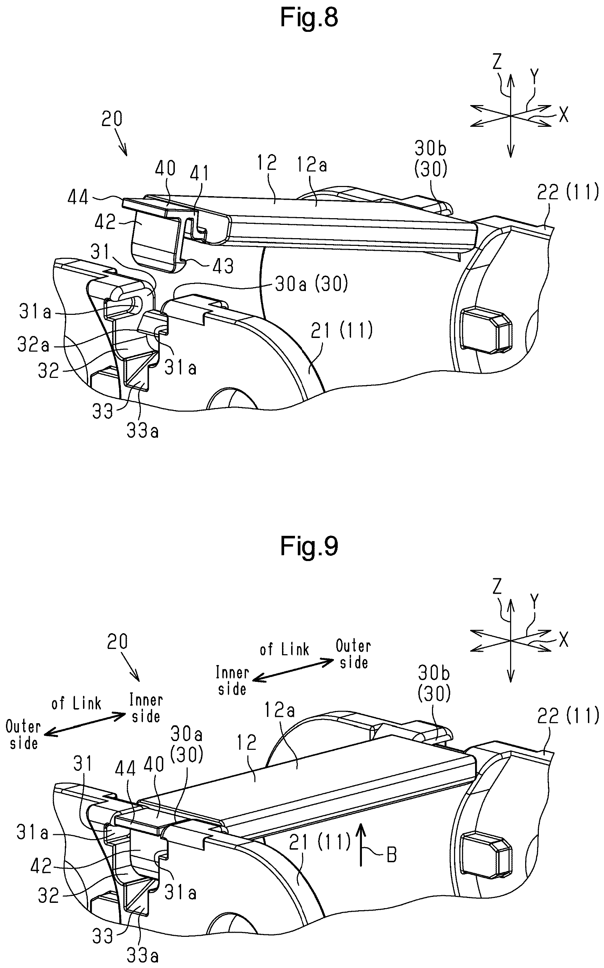

As shown in Fig. 8, the length of the first engaging portion 40 in the series-arrangement direction X, that is, the width of each of the curved portion 41, the hanging wall 42, the inward projection 43, and the outer protruding wall 44 in the series-arrangement direction X, is slightly smaller than the width of the second cutout 32 in the same direction.

### (Second Engaging Portion)

As shown in Figs. 3 and 4, the second engaging portion 50 includes a protruding piece 51 that protrudes outward from the other longitudinal end of the body 12a, and the hinge shaft 52, which protrudes from the tip of the protruding piece 51 to opposite lateral sides of the body 12a. The cross-section of the hinge shaft 52 is circular.

### <Second Connecting Member>

As shown in Fig. 2, the second connecting member 13 is formed of an elongated plate member. The second connecting member 13 connects the two lower ends of the two link plates 11 to each other. As the link 20 is viewed in the widthwise direction Y, the second connecting member 13 is coupled at a position overlapping the first connecting member 12 in the vertical direction Z.

### <Coupling Mechanism of First Connecting Member>

As shown in Fig. 6, when the first connecting member 12 is coupled to the two link plates 11, first, the hinge shaft 52 of the second engaging portion 50 of the first connecting member 12 is inserted into the hinge shaft-receiving portion 31a in the second receiving portion 30b of the second link plate 22 from the outer side.

As shown in Fig. 7, the hinge shaft 52 is restricted from moving further toward the inner side of the second link plate 22 in a state in which the hinge shaft 52 is in contact with the semicircular edge of the hinge shaft-receiving portion 31a. Thus, the second engaging portion 50 of the first connecting member 12 is engaged with the second receiving portion 30b of the second link plate 22.

As shown in Figs. 7 and 8, the first connecting member 12 is pivoted about the hinge shaft 52 such that the first engaging portion 40 approaches the first receiving portion 30a of the first link plate 21.

As shown in Fig. 9, the first engaging portion 40 of the first connecting member 12 is inserted into the first cutout 31 in the first receiving portion 30a of the first link plate 21.

As shown in Figs. 10 and 11, the inward projection 43 of the hanging wall 42 of the first connecting member 12 is engaged with the outward projection 32a in the second cutout 32 of the first receiving portion 30a of the first link plate 21 from the outer side. As a result, the first engaging portion 40 is prevented from being removed from the receiving portion 30.

When the inward projection 43 engages with the outward projection 32a, the inclined surface 32b of the outward projection 32a comes into contact with the inclined surface 43a of the inward projection 43, thereby reducing resistance during the engagement. When the outward projection 32a and the inward projection 43 are about to disengage, the horizontal surface 32c of the outward projection 32a and the parallel surface 43b of the inward projection 43 come into contact with each other, thereby limiting disengagement.

Further, the curved portion 41 of the first engaging portion 40 comes into contact with the lower end of the first cutout 31 of the first receiving portion 30a. **In** other words, the curved portion 41 of the first engaging portion 40 comes into contact with the upper surface of the outward projection 32a of the second cutout 32. The contact of the curved portion 41 of the first engaging portion 40 with the upper surface of the outward projection 32a of the second cutout 32 limits rattling of the first connecting member 12.

As shown in Fig. 11, the upper surface (outer surface) of the outer protruding wall 44 of the first connecting member 12 is positioned below the upper end of the first link plate 21. The tip of the outer protruding wall 44 of the first engaging portion 40 is flush with the outer surface of the first link plate 21 in the thickness direction of the first link plate 21 without protruding from the outer surface.

The materials of the link plate 11, the first connecting member 12, and the second connecting member 13 of the guide device 10 are not particularly limited. Examples of the materials include resin and metal.

### <Operation and Advantages>

The operation of the guide device 10 of the present embodiment will now be described.

As shown in Figs. 9 and 11, in the guide device 10, upward stress (shown by arrow B) may be applied to the first connecting member 12 from the space inside the link 20 that accommodates an elongated object. For example, when the elongated object accommodated in the guide device 10 cannot follow movement of the guide device 10 or when there is no room in the accommodation space of the guide device 10, the stress may be applied. When the stress is applied, the longitudinal central portion of the first connecting member 12 tends to be displaced upward.

However, as shown in Fig. 11, even if the longitudinal central portion of the first connecting member 12 undergoes upward displacement, the horizontal surface 32c of the outward projection 32a remains in contact with the parallel surface 43b of the inward projection 43. Thus, the hanging wall 42 in the first engaging portion 40 of the first connecting member 12 is less likely to displace outward. This limits disengagement of the inward projection 43 of the hanging wall 42 from the outward projection 32a of the first link plate 21. That is, the first engaging portion 40 of the first connecting member 12 is less likely to detach from the first receiving portion 30a of the first link plate 21.

As shown in Fig. 11, to remove the first engaging portion 40 of the first connecting member 12 from the first receiving portion 30a of the first link plate 21, an upward stress (shown by arrow A) is applied to the outer protruding wall 44 of the first engaging portion 40 using a finger or a tool. When the curved portion 41 is flexed by the stress, the hanging wall 42 undergoes outward displacement. As a result, the inward projection 43 of the first engaging portion 40 is disengaged from the outward projection 32a of the first receiving portion 30a.

As shown in Fig. 9, since the outer protruding wall 44 is readily seen from the outside of the link 20, an operator readily recognizes that the outer protruding wall 44 is a portion for removal of the first connecting member 12 by application of stress. Further, the arrangement of the outer protruding wall 44 allows the operator to readily apply an upward stress by using a finger or a tool. This facilitates disengagement of the first engaging portion 40.

As shown in Fig. 9, the third cutout 33, which serves as the release recess into which a tool or a finger is inserted when the first engaging portion 40 is removed from the first receiving portion 30a of the first link plate 21, is further provided outside the link 20. Accordingly, as shown in Fig. 11, the first engaging portion 40 is also disengaged by inserting a tool or a finger in a direction along the inclined surface 33a of the third cutout 33 (i.e., the direction indicated by arrow C).

As shown in Figs. 8 and 9, the third cutout 33 includes the inclined surface 33a, which is inclined outward and obliquely downward. In addition, the width of the third cutout 33 in the series-arrangement direction X is smaller than that of the hanging wall 42 or the inward projection 43 of the first connecting member 12 in the same direction. In other words, the width of the third cutout 33 in the series-arrangement direction X is smaller than that of the second cutout 32 in the same direction. Thus, since the third cutout 33 includes the inclined surface 33a, which is inclined outward and obliquely downward, the operator readily recognizes the position of the third cutout 33. Further, since the width of the third cutout 33 is relatively small, the operator more readily recognizes the position of the third cutout 33 when viewing the link 20 from the outer side. Consequently, the operator readily disengages the first engaging portion 40 by inserting a tool or a finger into the third cutout 33.

The advantages of the guide device 10 of the present embodiment will now be described.
(1) The first engaging portion 40 of the first connecting member 12 includes the hanging wall 42, which extends in the thickness direction of the body 12a, the inward projection 43, which is located on the hanging wall 42 to engage with the outward projection 32a of the first link plate 21, and the outer protruding wall 44, which protrudes outward from the hanging wall 42.

Accordingly, even when the longitudinal central portion of the first connecting member 12 undergoes upward displacement, the disengagement of the inward projection 43 of the first engaging portion 40 from the outward projection 32a of the first link plate 21 is limited.

Further, the inward projection 43 of the first engaging portion 40 is readily disengaged from the outward projection 32a of the first link plate 21 by upwardly displacing the outer protruding wall 44 of the first engaging portion 40 using a finger or a tool. Furthermore, since the outer protruding wall 44 is readily seen from the outside of the link 20, the operator readily disengages the first engaging portion 40 by displacing the outer protruding wall 44.
(2) The first engaging portion 40 includes the curved portion 41, which is located between the hanging wall 42 and the body 12a. Since the curved portion 41 is provided, the curved portion 41 is flexed to readily displace the outer protruding wall 44. This facilitates disengagement of the first engaging portion 40.
(3) The first receiving portion 30a includes, on its outer surface, the third cutout 33 (release recess) into which a tool or a finger for disengaging the inward projection 43 from the outward projection 32a is inserted. This allows the first engaging portion 40 to be also disengaged by inserting a tool or a finger into the third cutout 33 (release recess). Since the operator is enabled to select a method for disengaging the first engaging portion 40, efficient work suited to the operator is achieved.
(4) The third cutout 33 (release recess) includes the inclined surface 33a, which is inclined obliquely outward and downward. This allows the operator to readily recognize the position of the third cutout 33 (release recess). Thus, the operator readily disengages the first engaging portion 40 by inserting a jig or a finger into the third cutout 33 (release recess).
(5) The width of the third cutout 33 (release recess) in the series-arrangement direction X is smaller than that of the hanging wall 42 or the inward projection 43 of the first connecting member 12 in the same direction. Accordingly, the operator more readily recognizes the position of the third cutout 33 when viewing the link 20 from the outer side. Consequently, the operator readily disengages the first engaging portion 40 by inserting a tool or a finger into the third cutout 33. In addition, the width of the third cutout 33 is relatively small. This prevents, for example, another member from being erroneously inserted into the third cutout 33.
(6) The outer surface of the outer protruding wall 44 of the first connecting member 12 is positioned below the outer surface of the body 12a of the first connecting member 12 and below the upper end of the first link plate 21. Thus, as shown in Fig. 9, another member is prevented from interfering with the outer protruding wall 44 from the upper side of the link 20.
(7) The tip of the outer protruding wall 44 of the first engaging portion 40 is flush with the outer end of the first link plate 21. Accordingly, as shown in Fig. 9, the irregularities at the outer end of the link 20 are reduced. This prevents another member from interfering with the outer end of the link 20.
(8) The two link plates 11 are bilaterally symmetrical. This allows the first connecting member 12 to be coupled to the two link plates 11 regardless of its left-right orientation, thereby improving work efficiency.

### Modifications

The present embodiment may be modified as follows. The present embodiment and the following modifications can be combined if the combined modifications remain technically consistent with each other.
- The outer surface of the outer protruding wall 44 of the first connecting member 12 does not have to be positioned below the outer surface of the body 12a of the first connecting member 12.

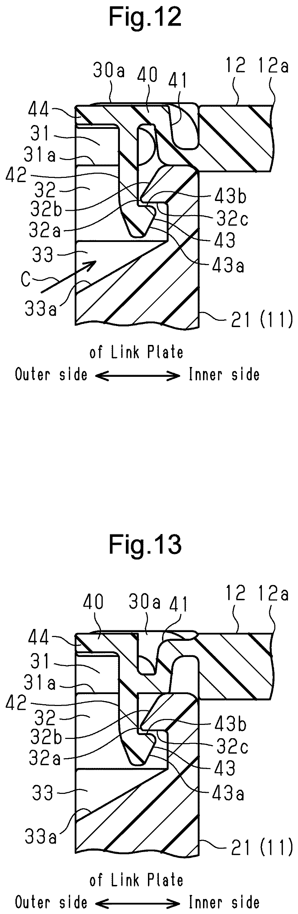

As shown in Fig. 12, for example, the outer surface of the outer protruding wall 44 of the first connecting member 12 may be flush with the outer surface of the body 12a of the first connecting member 12. Alternatively, the outer surface of the outer protruding wall 44 may be positioned above the outer surface of the body 12a of the first connecting member.
- The shape of the curved portion 41 of the first engaging portion 40 of the first connecting member 12 is not limited to the shape illustrated in the present embodiment.

As shown in Fig. 13, for example, the curved portion 41 may be crank-shaped, and may extend so as to protrude in the series-arrangement direction of the body 12a from one end of the body 12a, then curve downward, and further curve outward. Further, the number of portions curved in a crank shape is not limited to two, and may be three or more.
- The first engaging portion 40 of the first connecting member 12 does not have to include the curved portion 41.

As shown in Fig. 14, for example, the first engaging portion 40 of the first connecting member 12 may include a linear portion 45. The linear portion 45 extends linearly in the series-arrangement direction of the body 12a, and is located between one end of the body 12a and the hanging wall 42.
- In the present embodiment, the first engaging portion 40 of the first connecting member 12 includes the inward projection 43 as the inner engaging portion at the lower end of the hanging wall 42, and the first receiving portion 30a of the first link plate 21 includes the outward projection 32a as the outer receiving portion. However, this configuration does not have to be employed. One of the inner engaging portion and the outer receiving portion may be a recess as long as they are engageable with each other in a projection-and-recess relationship.
- In the present embodiment, the width of the third cutout 33 in the series-arrangement direction X is smaller than that of the inward projection 43 of the first engaging portion 40 in the same direction. However, this configuration does not have to be employed. The width of the third cutout 33 in the series-arrangement direction X may be equal to that of the inward projection 43. In other words, the width of the third cutout 33 in the series-arrangement direction X may be equal to that of the second cutout 32 in the same direction.
- The inclined surface 33a of the third cutout 33 does not have to be inclined outward and obliquely downward from the central portion of the second cutout 32 in the series-arrangement direction X. The inclined surface 33a of the third cutout 33 may be inclined outward and obliquely downward from one of the ends of the second cutout 32 in the series-arrangement direction X.
- The third cutout 33 does not have to include the inclined surface 33a That is, the third cutout 33 may be cut out in the thickness direction of the link plate 11.
- The third cutout 33, which serves as the release recess, does not have to be provided.
- The tip of the outer protruding wall 44 of the first engaging portion 40 may protrude from the outer surface of the first link plate 21 in the thickness direction of the first link plate 21, or may be located inward of the outer surface of the first link plate 21.
- In the present embodiment, each of the first receiving portion 30a and the second receiving portion 30b of two link plates 11 includes the outward projection 32a and the hinge shaft-receiving portion 31a. However, this configuration does not have to be employed. The first receiving portion 30a and the second receiving portion 30b may each include the outward projection 32a but do not have to include the hinge shaft-receiving portion 31a. Alternatively, only one of the first receiving portion 30a and the second receiving portion 30b may include the outward projection 32a, and only the other may include the hinge shaft-receiving portion 31a.
- In the first connecting member 12 of the present embodiment, the first engaging portion 40 includes the inward projection 43 and the second engaging portion 50 includes the hinge shaft 52. However, this configuration does not have to be employed. In the first connecting member 12, the first engaging portion 40 may include the hinge shaft 52 and the second engaging portion 50 may include the inward projection 43. Alternatively, the first connecting member 12 may include the inward projection 43 in both the first engaging portion 40 and the second engaging portion 50, and the hinge shaft 52 may be omitted.

## Claims

1. An elongated object guiding device, comprising links pivotably connected in series to each other, wherein
each of the links includes:
two link plates facing each other;
a first connecting member that couples the two link plates to each other; and
a second connecting member that couples the two link plates to each other,
the elongated object guiding device is configured to accommodate an elongated object in a space surrounded by the two link plates, the first connecting member, and the second connecting member in each of the links,
one of the two link plates in each of the links includes a first receiving portion and the other one of the two link plates includes a second receiving portion,
the first connecting member in each of the links includes a plate-shaped body, a first engaging portion that engages with the first receiving portion, and a second engaging portion that engages with the second receiving portion,
a side where the two link plates face each other is defined as an inner side of the link, and a side opposite thereto is defined as an outer side of the link,
at least one of the first receiving portion and the second receiving portion includes an outer receiving portion, and
at least one of the first engaging portion and the second engaging portion includes:
a hanging wall extending in a thickness direction of the body;
an inner engaging portion located on the hanging wall and configured to engage with the outer receiving portion; and
an outer protruding wall that protrudes outward from the hanging wall.

2. The elongated object guiding device according to claim 1, wherein
the first engaging portion includes a curved portion located between the hanging wall and the body.

3. The elongated object guiding device according to claim 1 or 2, wherein
an outer surface of at least one of the first receiving portion and the second receiving portion includes a release recess for disengaging the inner engaging portion from the outer receiving portion.

4. The elongated object guiding device according to claim 3, wherein
a width of the release recess in a series-arrangement direction of the links is less than or equal to a width of the inner engaging portion of the first connecting member in the series-arrangement direction.

5. The elongated object guiding device according to any one of claims 1 to 4, wherein
an outer surface of the outer protruding wall of the first connecting member is located below an outer surface of the body of the first connecting member.

6. The elongated object guiding device according to any one of claims 1 to 5, wherein
the other one of the first receiving portion and the second receiving portion includes a hinge shaft-receiving portion, and
the other one of the first engaging portion and the second engaging portion includes a hinge shaft that engages with the hinge shaft-receiving portion.
